**Europäisches Patentamt**

(19) **European Patent Office**

**Office européen des brevets**

(11) Veröffentlichungsnummer: **0 169 806**
**B1**

(12) **EUROPÄISCHE PATENTSCHRIFT**

(45) Veröffentlichungstag der Patentschrift:
14.12.88

(21) Anmeldenummer: **85810314.6**

(22) Anmeldetag: **08.07.85**

(51) Int. Cl.⁴: **B 05 B 3/10,** B 05 B 9/03,
A 01 M 7/00

(54) Sprayvorrichtung für Pflanzenschutzmittel.

(30) Priorität: **19.07.84 CH 3517/84**

(43) Veröffentlichungstag der Anmeldung:
**29.01.86 Patentblatt 86/5**

(45) Bekanntmachung des Hinweises auf die Patenterteilung:
**14.12.88 Patentblatt 88/50**

(84) Benannte Vertragsstaaten:
**AT CH DE FR GB IT LI NL**

(56) Entgegenhaltungen:
**FR-A-2 362 673**
**US-A-4 362 275**

(73) Patentinhaber: **CIBA- GEIGY AG, Klybeckstrasse 141, CH- 4002 Basel (CH)**

(72) Erfinder: **Graber, Alfred, Weidstrasse 167, CH- 5525 Fischbach- Göslikon (CH)**

## Beschreibung

Die Erfindung betrifft eine tragbare Sprühvorrichtung gemäss Oberbegriff des Anspruchs 1.

Bei tragbaren Sprühgeräten dieser Art kommt es vor allem darauf an, dass erstens der Energiebedarf möglichst gering, zweitens die mitgeführte Menge an Spritzmittel möglichst gross und drittens die Lanze mit allen daran befestigten Teilen (Sprühkopf mit Behälter) möglichst leicht ist. Insbesondere die beiden letzten Forderungen konnten bislang nicht auf einen Nenner gebracht werden. So muss z. B. bei dem aus FR-A-2 362 673 bekannten Gerät der die Sprühscheibe speisende Wirkstoffbehälter relativ klein bemessen werden, weil sonst die Lanze unhandlich schwer wird. Dies bedingt ein häufiges Nachfüllen auf dem Felde. Die Handhabung des Sprühkopfes ist dabei ziemlich schwierig, sodass die Gefahr gross ist, dass der Benutzer mit der Flüssigkeit in Berührung kommt, was bei manchen Insektiziden gefährlich sein kann.

Der Erfindung liegt die Aufgabe zugrunde, den oben erwähnten Nachteil der bekannten Sprühvorrichtung zu beseitigen. Diese Aufgabe wird mit den kennzeichnenden Merkmalen des Anspruchs 1 gelöst.

Dadurch kann der erste Behälter im Feld über die Zuführleitung ohne Öffnen von Verschlussdeckeln kontaminationssicher nachgefüllt werden, sodass eine grosse Fläche gefahrlos besprüht werden kann. Weil der zweite Behälter wesentlich grösser als der erste Behälter sein kann, ohne die Handhabung der Vorrichtung zu beeinträchtigen, kann er eine grosse Einfüllöffnung aufweisen, sodass das ohnehin seltenere Nachfüllen den Benützer wesentlich weniger gefährdet.

Der zweite Behälter wird zweckmässig am Rücken getragen. Die Vorrichtung ist dann trotz der wesentlich grösseren Vorratsmenge ebenso handlich zu bedienen wie die erwähnte bekannte Vorrichtung.

Nachfolgend wird die Erfindung anhand eines in den Figuren dargestellten Ausführungsbeispiels näher erläutert; es zeigen:

Fig. 1    die Sprühvorrichtung in Betriebsstellung,
Fig. 2    die Sprühvorrichtung in abgestellter Position,
Fig. 3    die Sprühvorrichtung beim Nachfüllen des ersten Behälters.

Die Sprühvorrichtung umfasst eine Lanze 2, an deren vorderem Ende ein Sprühkopf 1 lösbar befestigt ist. Der Sprühkopf 1 weist eine Luftturbine 4 und eine auf deren Abtriebswelle befestigte Sprühscheibe 6 auf. Am Turbinengehäuse ist ein geschlossener, transparenter erster Behälter 8 für ein Insektizid 10 befestigt. Vom Behälter 8 führt eine Verbindungsleitung 14 zu einer Düse 16 in der Nähe des Zentrums der Sprühscheibe 6. Ein Entlüftungsschlauch 32 verbindet ausserdem das Behälterinnere mit der Sprühscheibe 6. Der Entlüftungsschlauch 32 ist im Behälterinneren bis in die Gegend des Anschlusses der Verbindungsleitung 14 geführt, damit die für die Durchflussmenge durch die Verbindungsleitung 14 massgebende Förderhöhe unabhängig ist vom Füllstand des Behälters 8. Allfällig an der Mündung des Entlüftungsschlauches 32 sich bildende Tropfen werden durch die Sprühscheibe 6 versprüht.

Diametral gegenüberliegend zum Anschlußstutzen der Verbindungsleitung 14 an den Behälter 8 ist an diesem mittels einer Steckkupplung 38 ein Verbindungsschlauch 20 angeschlossen, der an der Lanze 2 befestigt ist. Das andere Ende des Schlauches 20 ist mit einer Steckkupplung 36 an einen Vorratsbehälter 22 angeschlossen. Im Anschlusselement 31 für die Steckkupplung 36 ist ein Absperrventil 30 angeordnet. Der Behälter 22 hat eine gross bemessene Einfüllöffnung 26, die mit einem Deckel 24 dicht verschlossen ist. Zwei Tragschlaufen 28 ermöglichen das Tragen des Behälters 22 am Rücken der Bedienungsperson. Die Turbine 4 gibt ein akustisches Signal ab, wenn eine bestimmte Minimaldrehzahl unterschritten wird. Am Behälter 22 ist eine Luftpumpe 44 mit einem handbetätigten Hebel 46 befestigt. Der Druckluftausgang 45 der Pumpe 44 ist über das Anschlusselement 31, eine lösbare Kupplung 40, einen Verbindungsschlauch 42 und die hohle Lanze 2 mit der Turbine 4 verbunden. Statt der Turbine 4 kann auch ein Elektromotor vorgesehen sein.

Die Lanze 2 ist um ihre Achse drehbar sowie in einer Vertikalebene schwenkbar am Behälter 22 lösbar befestigt.

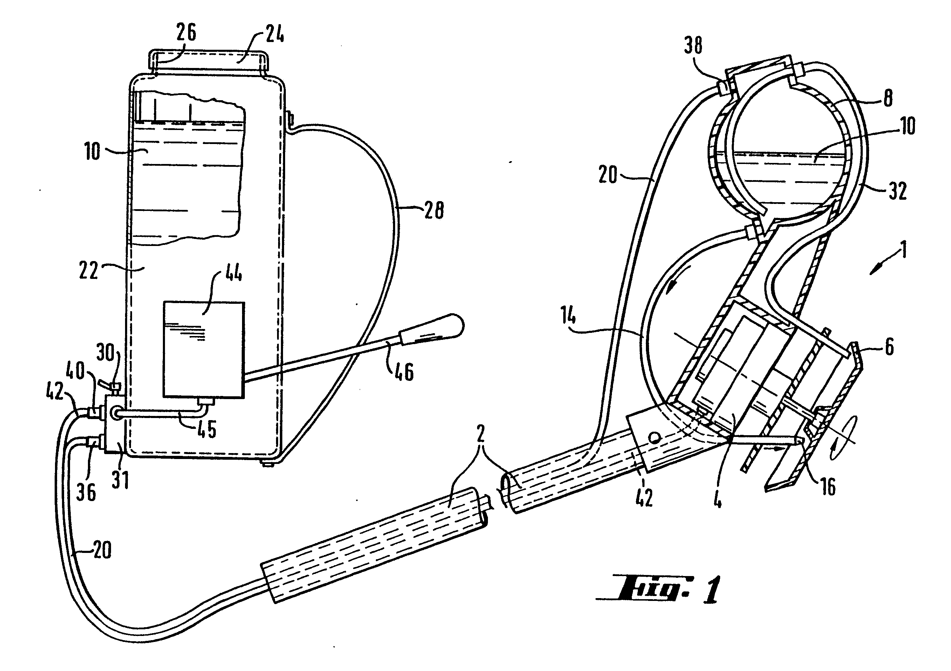

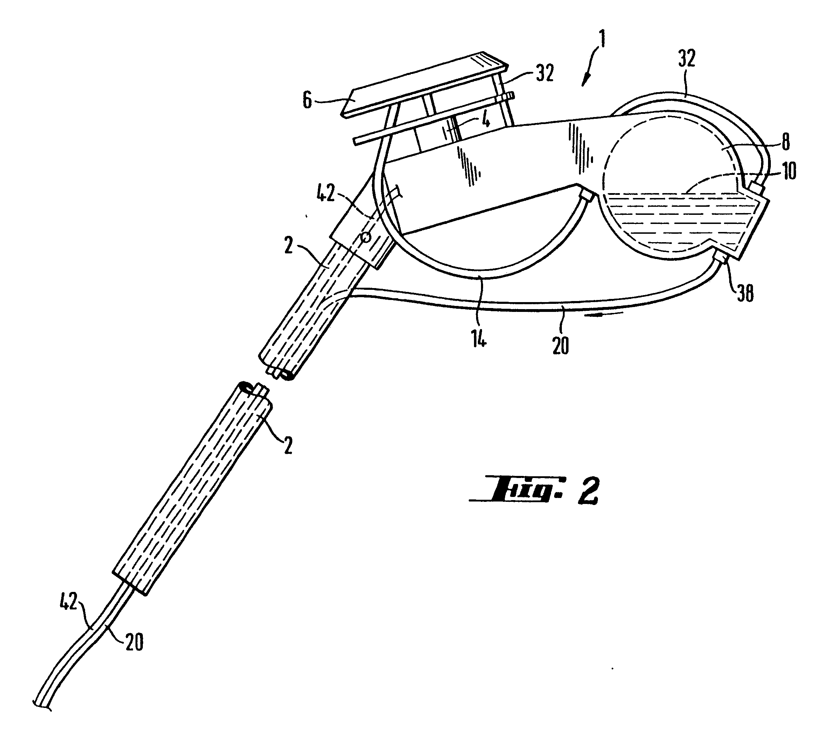

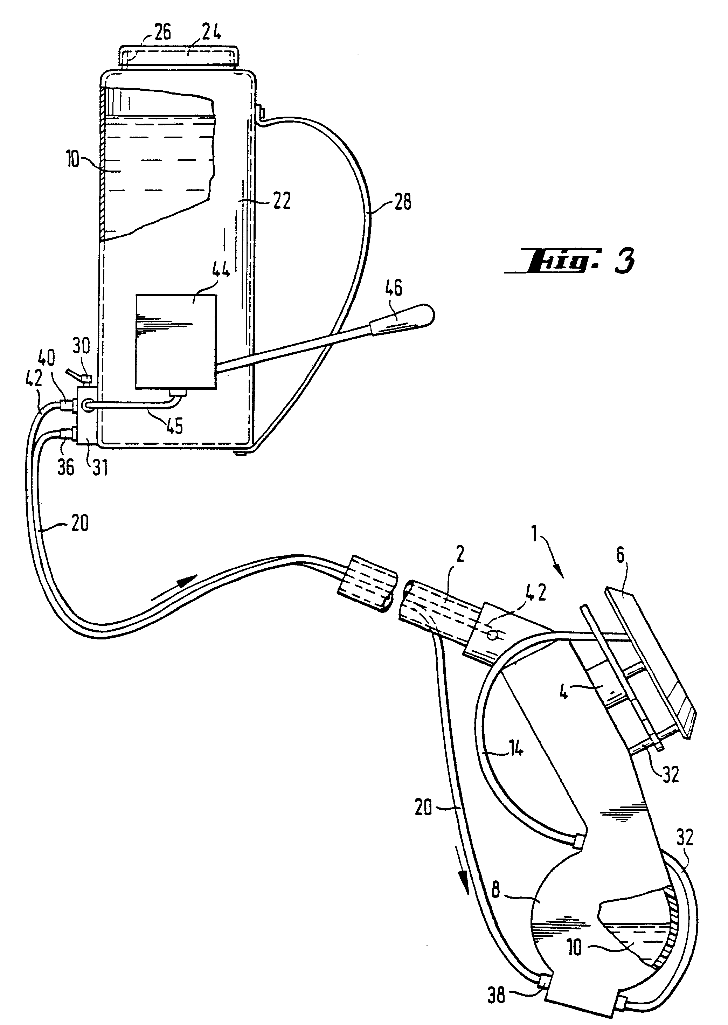

Um die Vorrichtung betriebsbereit zu machen, wird zunächst der Sprühkopf 1 auf der Lanze montiert und die Kupplung 38 am Behälter 8 angeschlossen. Der Behälter 22 wird mit dem Insektizid gefüllt und verschlossen. Nachdem der Behälter 22 am Rücken hängt, werden die Kupplungen 36 und 40 angekuppelt. Auf dem Feld wird die Lanze in Füllposition gebracht (Fig. 3) und das Absperrventil 30 geöffnet. Nun fliesst das Insektizid aus dem Behälter 22 in den Behälter 8. Wenn der Behälter 8 voll ist, wird das Absperrventil 30 geschlossen. Zum Sprühen wird zunächst die Turbine 4 in Betrieb gesetzt und die Lanze 2 in Arbeitsstellung gebracht (Fig. 1). Das Insektizid fliesst dabei aus dem Behälter 8 durch die Zuführleitung 14 und die Düse 16 auf die rotierende Sprühscheibe 6 und wird versprüht. Bei Unterbrechungen wird die Lanze 2 um 180° längs ihrer Achse in die Abstellposition gedreht (Fig. 2) und die Turbine abgestellt. Zum Weiterarbeiten wird die Turbine 4 in Betrieb gesetzt und die Lanze 2 wieder um 180° in die Arbeitsstellung (Fig. 1) gedreht. Nach beendeter Arbeit wird die Lanze 2 in Abstellposition (Fig. 2) gehalten und das Absperrventil 30 geöffnet. Damit fliesst die Restflüssigkeit aus dem Behälter 8 in den Behälter 22 zurück. Nach Schliessen des Ventils 30 und Abkuppeln des Schlauches 20 vom Behälter 22 kann die Vorrichtung gespült werden.

Die ganze Spritzarbeit kann durchgeführt werden, ohne mit dem Insektizid in Berührung zu kommen. Beispielsweise reicht eine Füllmenge des am Rücken tragbaren Behälters von 5 Litern zum Bespritzen einer Fläche von 2 bis 5 Hektaren. Bei noch grösseren zu bearbeitenden Flächen ist das Nachfüllen wegen der grossen Einfüllöffnung 26 und dem relativ sicheren Stand des Behälters 22 auf dem Boden problemlos.

Die Vorrichtung eignet sich vor allem zum Versprühen von Insektiziden und Fungiziden.

## Patentansprüche

1. Tragbare Sprühvorrichtung für Pflanzenschutzmittel mit einer von Hand führbaren Lanze (2) mit einem Sprühkopf (1), der einen Motor (4), eine mit dessen Abtriebswelle verbundene Sprühscheibe (6), und einen ersten Behälter (8) umfasst, an welchen eine in der Nähe des Zentrums der Sprühscheibe (6) mündende Verbindungsleitung (14) angeschlossen ist, dadurch gekennzeichnet, dass der erste Behälter (8) relativ klein und mittels einer mindestens über einen Teil ihrer Länge flexiblen Zuführleitung (20) mit einem relativ grösseren, separat tragbaren zweiten Behälter (22) verbunden ist.

2. Vorrichtung nach Anspruch 1, dadurch gekennzeichnet, dass der erste Behälter (8) durch Bewegen unterhalb des Niveaus des zweiten Behälters (22) von diesem über die Zuführleitung (20) durch Schwerkraftwirkung füll- bzw. nachfüllbar ist.

3. Vorrichtung nach Anspruch 1 oder 2, dadurch gekennzeichnet, dass die beiden Behälter (8 und 22) und die Verbindungs- sowie die Zuführleitung (14 bzw. 20) so angeordnet sind, dass in der Füllstellung der erste Behälter (8) tiefer liegt als die sprühscheibenseitige Mündung der Verbindungsleitung (14).

4. Vorrichtung nach einem der vorangehenden Ansprüche, dadurch gekennzeichnet, dass die Zuführleitung (20) und die Verbindungsleitung (14) wenigstens annähernd diametral gegenüberliegend in den ersten Behälter (8) münden.

5. Vorrichtung nach einem der vorangehenden Ansprüche, dadurch gekennzeichnet, dass eine Entlüftungsleitung (32) an den ersten Behälter (8) angeschlossen und innerhalb des ersten Behälters (8) bis in die Nähe des Anschlusses der Verbindungsleitung (14) weitergeführt ist, und dass die Entlüftungsleitung (32) andernends gegen die Sprühscheibe (6) mündet.

6. Vorrichtung nach einem der vorangehenden Ansprüche, dadurch gekennzeichnet, dass die Zuführleitung (20) mindestens mit dem zweiten Behälter (22) lösbar verbunden ist, und dass in der Leitung vom zweiten Behälter (22) zur Anschlußstelle der Zuführleitung (20) ein Absperrventil (30) angeordnet ist.

7. Vorrichtung nach einem der vorangehenden Ansprüche, dadurch gekennzeichnet, dass der Motor (4) als Luftturbine ausgebildet ist, deren Luftzuführleitung durch die Lanze geführt ist.

8. Vorrichtung nach einem der Ansprüche 1 bis 6, dadurch gekennzeichnet, dass der Motor (4) ein Elektromotor ist.

9. Vorrichtung nach einem der vorangehenden Ansprüche, dadurch gekennzeichnet, dass mit dem Motor (4) eine Warneinrichtung verbunden ist, welche im Betrieb ein Signal abgibt, wenn die Motordrehzahl einen vorbestimmten Grenzwert unterschreitet.

10. Vorrichtung nach einem der vorangehenden Ansprüche, dadurch gekennzeichnet, dass die Lanze (2) um ihre Achse drehbar sowie in einer Vertikalebene schwenkbar am zweiten Behälter (22), vorzugsweise lösbar, befestigt ist.

## Claims

1. A portable device for spraying plant protective agents with a lance (2) that can be steered manually and has a spray head (1) consisting of a motor (4), a spray disc (6) joined to the drive shaft of the motor and a first container (8), and to which a connecting tube (14) is joined which has its orifice near the centre of the spray disc (6), characterised in that the first container (8) is relatively small and connected to a relatively large, separately portable second container (22) by means of a feed tube (20) which is flexible over at least part of its length.

2. A device in accordance with Claim 1, characterised in that the first container (8) can be filled or refilled from the second container (22) by means of the feed tube (20) and the effect of gravity by being moved below the level of said second container.

3. A device in accordance with Claim 1 or 2, characterised in that the two containers (8 and 22) and both the connecting and feed tubes (14 and 20 respectively) are arranged in such a way that in the filling position, the first container (8) is situated lower than the orifice in the spray disc side of the connecting tube (14).

4. A device in accordance with one of the preceding Claims, characterised in that the feed tube (20) and the connecting tube (14) open into the first container (8) at least approximately diametrically opposite one another.

5. A device in accordance with one of the preceding Claims, characterised in that a vent tube (32) is connected to the first container (8) and is continued into the first container (8) to the vicinity of the junction with the connecting tube (14), and that the other end of the vent tube (32) opens against the spray disc (6).

6. A device in accordance with one of the preceding Claims, characterised in that the feed tube (20) is connected at least with the second container (22) so as to be detachable and that a check valve (30) is located in the tube leading from the second container (22) to the junction with the feed tube (20).

7. A device in accordance with one of the preceding Claims, characterised in that the motor (4) is designed as an air turbine with an air feed line extending through the lance.

8. A device in accordance with one of Claims 1 to 6, characterised in that the motor (4) is an electric motor.

9. A device in accordance with one of the preceding Claims, characterised in that the motor (4) is connected to a warning device which emits a signal in operation whenever the speed of the motor drops below a predetermined limit value.

10. A device in accordance with one of the preceding Claims, characterised in that the lance (2) is fixed, preferably in such a way as to be detachable, so that it can be rotated about its axis and slewed in a vertical plane to the second container (22).

## Revendications

1. Dispositif de pulvérisation portatif pour des produits phytosanitaires, comprenant une lance (2) pouvant être guidée manuellement et munie d'une tête de pulvérisation (1) qui comprend un moteur (4), un disque de pulvérisation (6) relié à l'arbre d'entraînement du moteur et un premier recipient (8) auquel est reliée une conduite de liaison (14) debouchant à proximite du centre du disque de pulvérisation (6), caractérisé en ce que le premier récipient (8) est relativement petit et relié au moyen d'une conduite d'amenée (20) qui est flexible au moins sur une partie de sa longueur à un deuxième récipient (22) relativement plus grand pouvant être porte séparément.

2. Dispositif selon la revendication 1, caractérisé en ce que le premier récipient (8) peut être rempli par gravité à partir du deuxième récipient (22) par la conduite d'amenée (20) en amenant le premier récipient au-dessous du niveau du deuxième récipient.

3. Dispositif selon la revendication 1 ou 2, caractérisé en ce que les deux récipients (8, 22) et les conduites de liaison et d'amenée (14 et 20) sont disposés de telle façon qu'en position de remplissage le premier récipient (8) se trouve plus bas que l'orifice côté disque de pulvérisation de la conduite de liaison (14).

4. Dispositif selon l'une quelconque des revendications précédentes caractérisé en ce que la conduite d'amenée (20) et la conduite de liaison (14) débouchent dans le premier récipient (8) de façon au moins à peu près diamétralement opposée.

5. Dispositif selon l'une quelconque des revendications précédentes, caractérisé en ce qu'une conduite d'aération (32) est raccordée au premier récipient (8) et s'étend à l'interieur du premier récipient (8) jusqu'à proximité du raccordement de la conduite de liaison (14), et que la conduite d'aération (32) débouche à l'autre extrémité contre le disque de pulvérisation (6).

6. Dispositif selon l'une quelconque des revendications précédentes, caractérisé en ce que la conduite d'amenée (20) est reliée de façon détachable au moins au deuxième récipient (22) et qu'un robinet d'arrêt (30) est disposé dans la conduite allant du deuxième récipient (22) à l'emplacement de raccordement de la conduite d'amenée (20).

7. Dispositif selon l'une quelconque des revendications précédentes, caractérisé en ce que le moteur (4) est réalisé comme turbine à air dont la conduite d'amenée d'air passe dans la lance.

8. Dispositif selon l'une quelconque des revendications 1 6, caractérisé en ce que le moteur (4) est un moteur éléctrique.

9. Dispositif selon l'une quelconque des revendications précédentes, caractérisé en ce qu'un dispositif d'alerte est relié au moteur (4), qui émet un signal lors du fonctionnement, lorsque la vitesse de rotation du moteur passe en dessous d'une valeur limite prédéterminée.

10. Dispositif selon l'une quelconque des revendications précédentes, caractérisé en ce que la lance (2) est fixée rotative autour de son axe et pivotante dans un plan vertical au deuxième récipient (22), de préférence de façon détachable.

Fig. 1

Fig. 2

6 32 1 32 8 10 4 42 2 2 38 14 20 2 42 20

0 169 806

3

0 169 806

Fig. 3